# EUROPÄISCHE PATENTSCHRIFT

(11) **EP 4 762 598 B1**
(45) Veröffentlichungstag und Bekanntmachung des Hinweises auf die Patenterteilung: **02.12.2026**
(21) Anmeldenummer: 24751697.4
(22) Anmeldetag: 01.08.2024
(51) Int. Cl.: H01M 4/04, H01M 4/133, H01M 4/1393, H01M 4/66, H01M 10/04, H01M 4/36, H01M 4/38, H01M 4/583, H01M 4/02

(54) **VERFAHREN ZUR HERSTELLUNG EINER NEGATIVEN ELEKTRODE, NEGATIVE ELEKTRODE, GALVANISCHE ZELLE UND VERWENDUNG DER GALVANISCHEN ZELLE**
METHOD FOR PRODUCING A NEGATIVE ELECTRODE, NEGATIVE ELECTRODE, GALVANIC CELL AND USE OF THE GALVANIC CELL
PROCÉDÉ DE FABRICATION D'ÉLECTRODE NÉGATIVE, ÉLECTRODE NÉGATIVE, CELLULE GALVANIQUE ET UTILISATION DE LA CELLULE GALVANIQUE

(30) Priorität: 16.08.2023 DE 102023121931
(43) Veröffentlichungstag der Anmeldung: 24.06.2026
(73) Patentinhaber: Fraunhofer-Gesellschaft zur Förderung der angewandten Forschung e.V., 80686 München (DE)
(72) Erfinder: SCHAD, Kathrin, 70569 Stuttgart (DE); BIRKE, Kai Peter, 70569 Stuttgart (DE); GRIMM, Julian, 70569 Stuttgart (DE)
(74) Vertreter: Pfenning, Meinig & Partner mbB
(86) Internationale Anmeldenummer: PCT/EP2024/071858
(87) Internationale Veröffentlichungsnummer: WO 2025/036726

(56) Entgegenhaltungen:
- EP-A1- 4 059 999
- CN-A- 102 420 318
- CN-A- 107 623 119
- CN-A- 113 539 690

## Beschreibung

Es wird ein Verfahren zur Herstellung einer negativen Elektrode einer galvanischen Zelle, eine negative Elektrode einer galvanischen Zelle und eine galvanische Zelle bereitgestellt und es wird eine Verwendung der galvanischen Zelle vorgeschlagen. Das Verfahren ist dadurch gekennzeichnet, dass eine erste flächige Metallstruktur in die Kohlenstoffbeschichtung einer zweiten flächigen Metallstruktur eingepresst wird und sich eine Vielzahl von Öffnungen an der flächigen Unterseite der ersten flächigen Metallstruktur zumindest bereichsweise mit Kohlenstoff der Kohlenstoffbeschichtung der zweiten flächigen Metallstruktur füllen. Hierbei enthält entweder die erste flächige Metallstruktur oder die zweite flächige Metallstruktur Aluminium oder eine Aluminiumlegierung oder besteht daraus. Mit dem erfindungsgemäßen Verfahren kann auf einfache und kostengünstige Art und Weise eine negative Elektrode hergestellt werden, die eine hohe Energiedichte, eine hohe Leistungsdichte und eine hohe Zykelfestigkeit aufweist.

Im Stand der Technik ist die Herstellung von Lithium-Aluminium-basierten negativen Elektroden für galvanische Zellen bekannt. Hierbei ist bekannt, Aluminium als Pulver zu verarbeiten und auch als Pulver zu beschichten (CN 107623119 A). Dies hat den Nachteil, dass die Verarbeitung aufwändig ist, da ein Beschichtungsprozess Teil des Herstellungsverfahrens ist. Ferner hat die Verwendung von Aluminiumpulver den Nachteil, dass die Zykelfestigkeit der hergestellten negativen Elektroden niedrig ausfällt und der Kapazitätsbeitrag von Aluminium nicht ausreichend genutzt wird, wodurch die erreichbare Energiedichte verbesserungswürdig ist. Ferner weisen die bekannten Lithium-Aluminium-basierten negativen Elektroden keine hohe Leistungsdichte auf. Zudem zeigen die bekannten Aluminium-basierten negativen Elektroden Hohe Volumenschübe beim Lithiieren und Delithiieren, was eine unzureichende Zykelstabilität hervorruft. Die bekannten Aluminium-basierten negativen Elektroden zeigen darüber hinaus hohe Nukleationsüberspannungen bei der LiAl-Legierungsbildung. Zudem sind die Herstellungsverfahren für solche negativen Elektroden kostenintensiv, wenn diese vor ihrem Betrieb in einer galvanischen Zelle bei ihrer Herstellung mit metallischem Lithium oder einer Lithiumlegierung versehen werden und auch schwierig in der Handhabung, wenn mit metallischem Lithium gearbeitet wird. Ein ähnlicher Elektrodenaufbau ist im Stand der Technik Dokument CN102420318 A zu finden.

Ferner ist im Stand der Technik die Herstellung von Kohlenstoff-Silizium-basierten negativen Elektroden bekannt. Hierbei ist bekannt, Silizium als Pulver zu verarbeiten und auch als Pulver zu beschichten (Jin, Y. et al., Advanced Energy Materials, Bd. 7, Ausgabe 23, 1700715, S. 1-17).). Dies hat den Nachteil, dass die Zykelfestigkeit der hergestellten negativen Elektroden niedrig ausfällt und der Kapazitätsbeitrag von Silizium nicht ausreichend genutzt wird, wodurch die erreichbare Energiedichte verbesserungswürdig ist. Zudem sind die Herstellungsverfahren für solche negativen Elektroden oft kostenintensiv und auch schwierig in der Handhabung, wenn mit metallischem Lithium gearbeitet wird.

Ausgegend hiervon war es die Aufgabe der vorliegenden Erfindung, ein möglichst einfaches und kostengünstiges Verfahren bereitzustellen, mit dem eine negative Elektrode für eine galvanische Zelle hergestellt werden kann, die eine hohe Zykelfestigkeit, eine hohe Energiedichte und eine hohe Leistungsdichte aufweist. Ferner sollte eine negative Elektrode bereitgestellt werden, die eine hohe Zykelfestigkeit, eine hohe Energiedichte und eine hohe Leistungsdichte aufweist. Darüber hinaus sollte eine galvanische Zelle bereitgestellt werden, die sich durch eine hohe Zykelfestigkeit, eine hohe Energiedichte und eine hohe Leistungsdichte auszeichnet. Zudem sollte eine Verwendung der galvanischen Zelle vorgeschlagen werden.

Die Aufgabe wird gelöst durch das Verfahren mit den Merkmalen von Anspruch 1, die negative Elektrode mit den Merkmalen von Anspruch 10, die galvanische Zelle mit den Merkmalen von Anspruch 19 und die Verwendung mit den Merkmalen von Anspruch 20. Die abhängigen Ansprüche zeigen vorteilhafte Weiterbildungen der erfindungsgemäßen Gegenstände auf.

Erfindungsgemäß wird ein Verfahren zur Herstellung einer negativen Elektrode, die zur Verwendung in einer galvanischen Zelle geeignet ist, bereitgestellt, umfassend
a) Bereitstellen einer ersten flächigen Metallstruktur, die eine flächige Oberseite und eine flächige Unterseite aufweist und in einer Richtung senkrecht zur Oberseite und Unterseite eine bestimmte Höhe aufweist, wobei die erste flächige Metallstruktur an ihrer flächigen Unterseite eine Vielzahl von Öffnungen aufweist, die sich von der Unterseite in Richtung der Oberseite der ersten flächigen Metallstruktur erstrecken;
b) Bereitstellen einer zweiten flächigen Metallstruktur, die eine flächige Oberseite und eine flächige Unterseite aufweist und in einer Richtung senkrecht zur Oberseite und Unterseite eine bestimmte Höhe aufweist, wobei zumindest die Oberseite der zweiten flächigen Metallstruktur eine Kohlenstoffbeschichtung aufweist, wobei die Kohlenstoffbeschichtung eine flächige Oberseite und eine flächige Unterseite aufweist und in einer Richtung senkrecht zur Oberseite und Unterseite eine bestimmte Höhe aufweist, wobei die Unterseite der Kohlenstoffbeschichtung die Oberseite der zweiten flächigen Metallstruktur kontaktiert;
dadurch gekennzeichnet, dass die erste flächige Metallstruktur zumindest in die Kohlenstoffbeschichtung der zweiten flächigen Metallstruktur eingepresst wird und sich die Vielzahl von Öffnungen an der flächigen Unterseite der ersten flächigen Metallstruktur zumindest bereichsweise mit Kohlenstoff der Kohlenstoffbeschichtung der zweiten flächigen Metallstruktur füllen, wobei die erste flächige Metallstruktur oder die zweite flächige Metallstruktur Aluminium oder eine Aluminiumlegierung enthält oder daraus besteht.

Mit dem erfindungsgemäßen Verfahren kann auf einfache und kostengünstige Art und Weise eine negative Elektrode hergestellt werden, die eine hohe Energiedichte, eine hohe Leistungsdichte und eine hohe Zykelfestigkeit aufweist.

Das Verfahren ist einfacher und die Handhabung verbessert, da in dem Verfahren kein Lithiummetall bei der Herstellung der negativen Elektrode eingesetzt wird (Lithium wird erst bei der Verwendung der negativen Elektrode in einer galvanischen Zelle in der negativen Elektrode abgeschieden).

Die hohe Energiedichte (d.h. Kapazität) im Vergleich zu bekannten Graphit-basierten negativen Elektroden ergibt sich durch das Aluminium in der negativen Elektrode. Im Vergleich zu bekannten Aluminium-basierten negativen Elektroden ergibt sich ebenfalls eine höhere Energiedichte (Kapazität) durch die Verwendung von Aluminium in Form einer flächigen Metallstruktur anstelle von Aluminiumpulver. Die flächige Metallstruktur von Aluminium ist auch ein Grund, warum sich die Zykelstabilität im Vergleich zu bekannten Li-basierten Anoden mit Aluminium verbessert, da die flächige (d.h. im Vergleich zu Aluminiumpulver zusammenhängenden) Metallstruktur des Aluminiums die mechanischen Eigenschaften der negativen Elektrode während eines Zyklierens verbessert.

Die höhere Leistungsdichte (d.h. eine homogenere Stromdichteverteilung und eine Steigerung der elektrischen Leistung) im Vergleich zu bekannten aluminiumbasierten negativen Elektroden ergibt sich durch die Anwesenheit von Kohlenstoff in der negativen Elektrode. Die höhere elektrische Leistung ist darin begründet, dass Alkalimetallionen (z.B. Lithiumionen) in Kohlenstoff schneller interkalieren und deinterkalieren können als Alkalimetallionen (z.B. Lithiummetallionen) in Aluminium diffundieren können. Die in Aluminium diffundierten Alkalimetallionen bilden bei der Diffusion in Aluminium eine Legierung mit Aluminium aus (z.B. eine Li-Al-Legierung), wobei die Diffusionskinetik von Alkalimetallionen durch die gebildete Legierung sogar weiter verlangsamt wird, was die Leistungsdichte verringert. Dieser Abfall in der Leistungsdichte kann durch die Anwesenheit von Kohlenstoff in der negativen Elektrode kompensiert werden. Da die durch das Verfahren hergestellte negative Elektrode sowohl Kohlenstoff als auch Aluminium enthält, ergänzen sich die Reaktions- und Diffusionskinetiken hierbei optimal. Der Kohlenstoff in der negativen Elektrode ist auch ein Grund, warum sich die Zykelstabilität im Vergleich zu bekannten Albasierten Anoden verbessert, da der Kohlenstoff das Aluminium mechanisch stützt und somit ein Ablösen von Aluminium und das Entstehen elektrisch isolierter Bereiche durch Volumenschübe während dem Zyklieren reduziert bis ganz verhindert. Dieser Effekt ist verstärkt, falls in dem Verfahren eine beidseitige Beschichtung der flächigen Metallstruktur mit Kohlenstoff erfolgt, da somit eine beidseitige "Ummantelung" von Aluminium erfolgt.

Eine Verbesserung der Zykelstabilität und Hystereseeigenschaften im Vergleich zu einer C-Si-Anode ergibt sich dadurch, dass in der erfindungsgemäßen negative Elektrode Aluminium anstelle von Silizium verwendet wird, was eine geringe Volumenexpansion während dem Zyklieren bewirkt und es erlaubt, dass der gesamte SOC-Bereich verbessert ist.

Eine Verbesserung der Zykelstabilität bei einer Zelle, die eine LMO-Kathode und eine Anode aus Kohlenstoff enthält, ergibt sich durch die Anwesenheit von Aluminium als weiterer Bestandteil der Anode, da das Aluminium als Mn²⁺-Fänger fungieren kann. Aufgrund des "Fangens" von Mn²⁺ durch das Aluminium der Anode kann eine Verstopfung der Interkalationskanäle des Kohlenstoffs durch Mangan und eine damit verbundene Anodendegradation verlangsamt bis ganz verhindert werden, wodurch die Zykelstabilität höher ist.

In einer bevorzugten Ausführungsform des Verfahrens enthält die erste flächige Metallstruktur Aluminium oder eine Aluminiumlegierung oder besteht daraus, wobei die Aluminiumlegierung bevorzugt mindestens 50 Gew.-% Aluminium enthält, und die zweite flächige Metallstruktur enthält ein Metall, das eine höhere Vickershärte aufweist als Aluminium, oder besteht daraus. Hierbei wird die erste flächige Metallstruktur über eine Strecke in die Kohlenstoffbeschichtung der zweiten flächigen Metallstruktur eingepresst, die maximal der bestimmten Höhe der Kohlenstoffbeschichtung entspricht.

In dieser bevorzugten Ausführungsform kann die zweite flächige Metallstruktur ein Metall enthalten oder daraus bestehen, das ausgewählt ist aus der Gruppe bestehend aus Nickel, Kupfer, Edelstahl und Kombinationen und Legierungen hiervon. Das Metall enthält bevorzugt Kupfer oder besteht daraus, wobei die zweite flächige Metallstruktur insbesondere eine Kupferfolie ist.

In einer alternativen, bevorzugten Ausführungsform des Verfahrens enthält die erste flächige Metallstruktur ein Metall oder besteht daraus, das eine höhere Vickershärte aufweist als Aluminium, und die zweite flächige Metallstruktur enthält Aluminium oder eine Aluminiumlegierung oder besteht daraus, wobei die Aluminiumlegierung bevorzugt mindestens 50 Gew.-% Aluminium enthält. Hierbei wird die erste flächige Metallstruktur über eine Strecke in die Kohlenstoffbeschichtung der zweiten flächigen Metallstruktur eingepresst, die mindestens der bestimmten Höhe der Kohlenstoffbeschichtung entspricht. Bevorzugt entspricht die Strecke mindestens einer Summe der bestimmten Höhe der Kohlenstoffbeschichtung und der bestimmten Höhe der zweiten flächigen Metallstruktur und die Vielzahl von Öffnungen an der Unterseite der ersten flächigen Metallstruktur füllen sich zusätzlich mit Aluminium oder der Aluminiumlegierung der zweiten flächigen Metallstruktur. Besagte Strecke entspricht besonders bevorzugt einer Summe der bestimmten Höhe der Kohlenstoffbeschichtung, der bestimmten Höhe der zweiten flächigen Metallstruktur und einer bestimmten Höhe einer weiteren Kohlenstoffbeschichtung, die auf die Unterseite der zweiten flächigen Metallstruktur aufgebracht wird oder ist, wobei sich die Vielzahl von Öffnungen an der Unterseite der ersten flächigen Metallstruktur zusätzlich noch mit Kohlenstoff der weiteren Kohlenstoffbeschichtung füllen. Je "tiefer" die erste flächige Metallstruktur eingepresst wird, desto kompakter wird die negative Elektrode und desto mechanisch stabiler wird die negative Elektrode.

In dieser alternativen, bevorzugten Ausführungsform kann die erste flächige Metallstruktur ein Metall enthalten oder daraus bestehen, das ausgewählt ist aus der Gruppe bestehend aus Nickel, Kupfer, Edelstahl und Kombinationen und Legierungen hiervon, wobei das Metall bevorzugt Edelstahl enthält oder daraus besteht. Insbesondere ist die erste flächige Metallstruktur ein Edelstahlnetz mit einer Vielzahl von Öffnungen an der Unterseite des Edelstahlnetzes, ein Edelstahlstreckmetall mit einer Vielzahl von Öffnungen an der Unterseite des Edelstahlstreckmetalls oder eine Edelstahlfolie mit einer Vielzahl von Öffnungen an der Unterseite der Edelstahlfolie.

In dem erfindungsgemäßen Verfahren kann die erste flächige Metallstruktur eine Vielzahl durchgängiger Öffnungen aufweisen, die sich von der Unterseite bis zur Oberseite der ersten flächigen Metallstruktur erstrecken. Dies hat den Vorteil, dass beim Einpressen der ersten flächigen Metallstruktur in die Kohlenstoffbeschichtung der zweiten flächigen Metallstruktur keine Lufteinschlüsse auftreten können bzw. keine Luft komprimiert wird, was die mechanische Stabilität der hergestellten negativen Elektrode erhöhen und eine stabilere und effizientere elektrische Kontaktierung bewirken kann.

Ferner kann die erste flächige Metallstruktur ausgewählt sein aus der Gruppe bestehend aus Metallfolie, Streckmetall, Lochblech, Metallnetz und Kombinationen hiervon.

Darüber hinaus kann die erste flächige Metallstruktur auf der Oberseite und/oder Unterseite eine Bekeimungsschicht aufweisen und diese Bekeimungsschicht kontaktieren. Die Bekeimungsschicht kann ein Metall enthalten oder daraus bestehen, das ausgewählt ist aus der Gruppe bestehend aus Zink, Zinn, Indium und Kombinationen hiervon. Die Bekeimungsschicht weist bevorzugt eine Höhe, in einer Richtung senkrecht auf die Oberseite und/oder Unterseite der Bekeimungsschicht, im Bereich von > 0 und < 1 µm auf.

Abgesehen davon kann die erste flächige Metallstruktur eine Höhe, in einer Richtung senkrecht auf die Oberseite und/oder Unterseite der ersten flächigen Metallstruktur, im Bereich von 1 bis 100 µm, bevorzugt 5 bis 50 µm, besonders bevorzugt 10 bis 40 µm, aufweisen.

Zudem kann die erste flächige Metallstruktur eine Oberflächenstrukturierung auf der Oberseite und/oder Unterseite aufweisen, wobei die Oberflächenstrukturierung bevorzugt ausgewählt ist aus der Gruppe bestehend aus gebürstete Oberflächenstrukturierung, geriffelte Oberflächenstrukturierung, geprägte Oberflächenstrukturierung, geätzte Oberflächenstrukturierung, gelaserte Oberflächenstrukturierung und Kombinationen hiervon.

In dem erfindungsgemäßen Verfahren kann die zweite flächige Metallstruktur ausgewählt sein aus der Gruppe bestehend aus Metallfolie, Streckmetall, Lochblech, Metallnetz und Kombinationen hiervon.

Ferner kann die zweite flächige Metallstruktur auf der Oberseite und/oder Unterseite eine Bekeimungsschicht aufweisen und diese Bekeimungsschicht kontaktieren. Die Bekeimungsschicht kann ein Metall enthalten oder daraus bestehen, das ausgewählt ist aus der Gruppe bestehend aus Zink, Zinn, Indium und Kombinationen hiervon. Die Bekeimungsschicht weist bevorzugt eine Höhe, in einer Richtung senkrecht auf die Oberseite und/oder Unterseite der Bekeimungsschicht, im Bereich von > 0 und < 1 µm auf.

Darüber hinaus kann die zweite flächige Metallstruktur in einer Richtung senkrecht auf die Oberseite und/oder Unterseite der zweiten flächigen Metallstruktur, eine Höhe im Bereich von 1 bis 100 µm, bevorzugt 2 bis 50 µm, besonders bevorzugt 5 bis 40 µm, optional 10 bis 20 µm, aufweisen.

Abgesehen davon kann die zweite flächige Metallstruktur eine Oberflächenstrukturierung auf der Oberseite und/oder Unterseite aufweisen, wobei die Oberflächenstrukturierung bevorzugt ausgewählt ist aus der Gruppe bestehend aus gebürstete Oberflächenstrukturierung, geriffelte Oberflächenstrukturierung, geprägte Oberflächenstrukturierung, geätzte Oberflächenstrukturierung, gelaserte Oberflächenstrukturierung und Kombinationen hiervon.

In dem erfindungsgemäßen Verfahren kann die Kohlenstoffbeschichtung, optional auch eine weitere Kohlenstoffbeschichtung, die auf die Unterseite der zweiten flächigen Metallstruktur aufgebracht wird oder ist, einen Kohlenstoff enthalten oder daraus bestehen, der ausgewählt ist aus der Gruppe bestehend aus Aktivkohle, Graphit, Graphen, Leitruß, Kohlenstoffnanoröhrechen, Kohlenstoffnanodrähte, Kohlenstoff C65, Kohlenstoff C45 und Kombinationen hiervon.

Ferner kann die Kohlenstoffbeschichtung, optional auch eine weitere Kohlenstoffbeschichtung, die auf die Unterseite der zweiten flächigen Metallstruktur aufgebracht wird oder ist, eine Höhe im Bereich von 1 bis 100 µm, bevorzugt im Bereich von 2 bis 50 µm, besonders bevorzugt im Bereich von 5 bis 40 µm, aufweisen.

In einer bevorzugten Ausführungsform umfasst das Einpressen der ersten flächigen Metallstruktur in die Kohlenstoffbeschichtung der zweiten flächigen Metallstruktur ein Ausüben eines mechanischen Drucks von mindestens 390 kg/cm², bevorzugt im Bereich von 2500 bis 6000 kg/cm², auf die Oberseite der ersten flächigen Metallstruktur, oder besteht daraus. Besonders bevorzugt wird der mechanische Druck über eine Kalthebelpresse für eine Dauer von 10 bis 20 Sekunden bei einer Temperatur im Bereich von 20 bis 30 °C appliziert.

Erfindungsgemäß wird ferner eine negative Elektrode, die zur Verwendung in einer galvanischen Zelle geeignet ist, bereitgestellt, enthaltend oder bestehend aus:
a) eine erste flächige Metallstruktur, die eine flächige Oberseite und eine flächige Unterseite aufweist und in einer Richtung senkrecht zur Oberseite und Unterseite eine bestimmte Höhe aufweist, wobei die erste flächige Metallstruktur eine Vielzahl von Öffnungen an ihrer Unterseite aufweist, die sich von der Unterseite in Richtung der Oberseite der ersten flächigen Metallstruktur erstrecken;
b) eine zweite flächige Metallstruktur, die eine flächige Oberseite und eine flächige Unterseite aufweist und in einer Richtung senkrecht zur Oberseite und Unterseite eine bestimmte Höhe aufweist, wobei zumindest die Oberseite der zweiten flächigen Metallstruktur eine Kohlenstoffbeschichtung aufweist, wobei die Kohlenstoffbeschichtung eine flächige Oberseite und eine flächige Unterseite aufweist und in einer Richtung senkrecht zur Oberseite und Unterseite eine bestimmte Höhe aufweist, wobei die Unterseite der Kohlenstoffbeschichtung die Oberseite der zweiten flächigen Metallstruktur kontaktiert;
dadurch gekennzeichnet, dass die erste flächigen Metallstruktur in die Kohlenstoffbeschichtung der zweiten flächigen Metallstruktur eingepresst ist, sodass die Vielzahl von Öffnungen an der Unterseite der ersten flächigen Metallstruktur zumindest bereichsweise zumindest mit Kohlenstoff der Kohlenstoffbeschichtung der zweiten flächigen Metallstruktur gefüllt sind, wobei die erste flächige Metallstruktur oder die zweite flächige Metallstruktur Aluminium oder eine Aluminiumlegierung enthält oder daraus besteht.

In einer bevorzugten Ausgestaltungsform der negativen Elektrode enthält die erste flächige Metallstruktur Aluminium oder eine Aluminiumlegierung oder besteht daraus, wobei die Aluminiumlegierung bevorzugt mindestens 50 Gew.-% Aluminium enthält, und die zweite flächige Metallstruktur enthält ein Metall, das eine höhere Vickershärte aufweist als Aluminium, oder besteht daraus. Hierbei ist erste flächige Metallstruktur über eine Strecke in die Kohlenstoffbeschichtung der zweiten flächigen Metallstruktur eingepresst, die maximal der bestimmten Höhe der Kohlenstoffbeschichtung entspricht.

In dieser bevorzugten Ausgestaltungsform kann die zweite flächige Metallstruktur ein Metall enthalten oder daraus bestehen, das ausgewählt ist aus der Gruppe bestehend aus Nickel, Kupfer, Edelstahl und Kombinationen und Legierungen hiervon, wobei das Metall bevorzugt Kupfer enthält oder daraus besteht.

In einer alternativen, bevorzugten Ausgestaltungsform der negativen Elektrode enthält die erste flächige Metallstruktur ein Metall, das eine höhere Vickershärte aufweist als Aluminium, oder besteht daraus, und die zweite flächige Metallstruktur enthält Aluminium oder eine Aluminiumlegierung oder besteht daraus, wobei die Aluminiumlegierung bevorzugt mindestens 50 Gew.-% Aluminium enthält. Hierbei ist die erste flächige Metallstruktur über eine Strecke in die Kohlenstoffbeschichtung der zweiten flächigen Metallstruktur eingepresst, die mindestens der bestimmten Höhe der Kohlenstoffbeschichtung entspricht. Besagte Strecke entspricht bevorzugt mindestens einer Summe der bestimmten Höhe der Kohlenstoffbeschichtung und der bestimmten Höhe der zweiten flächigen Metallstruktur und die Vielzahl von Öffnungen an der Unterseite der ersten flächigen Metallstruktur sind zusätzlich mit Aluminium oder der Aluminiumlegierung der zweiten flächigen Metallstruktur gefüllt. Besagte Strecke entspricht besonders bevorzugt einer Summe der bestimmten Höhe der Kohlenstoffbeschichtung, der bestimmten Höhe der zweiten flächigen Metallstruktur und einer bestimmten Höhe einer weiteren Kohlenstoffbeschichtung, die auf die Unterseite der zweiten flächigen Metallstruktur aufgebracht ist, und die Vielzahl von Öffnungen an der Unterseite der ersten flächigen Metallstruktur sind zusätzlich noch mit Kohlenstoff der weiteren Kohlenstoffbeschichtung gefüllt.

In dieser alternativen, bevorzugten Ausgestaltungsform kann die erste flächige Metallstruktur ein Metall enthalten oder daraus bestehen, das ausgewählt ist aus der Gruppe bestehend aus Nickel, Kupfer, Edelstahl und Kombinationen und Legierungen hiervon, wobei das Metall bevorzugt Edelstahl enthält oder daraus besteht. Insbesondere ist die erste flächige Metallstruktur ein Edelstahlnetz mit einer Vielzahl von Öffnungen an der Unterseite des Edelstahlnetzes, ein Edelstahlstreckmetall mit einer Vielzahl von Öffnungen an der Unterseite des Edelstahlstreckmetalls oder eine Edelstahlfolie mit einer Vielzahl von Öffnungen an der Unterseite der Edelstahlfolie.

In der erfindungsgemäßen negativen Elektrode kann die erste flächige Metallstruktur eine Vielzahl durchgängiger Öffnungen aufweisen, die sich von der Unterseite bis zur Oberseite der ersten flächigen Metallstruktur erstrecken.

Ferner kann die erste flächige Metallstruktur ausgewählt sein aus der Gruppe bestehend aus Metallfolie, Streckmetall, Lochblech, Metallnetz und Kombinationen hiervon.

Darüber hinaus kann die erste flächige Metallstruktur auf der Oberseite und/oder Unterseite eine Bekeimungsschicht aufweisen und diese Bekeimungsschicht kontaktieren. Die Bekeimungsschicht kann ein Metall enthalten oder daraus bestehen, das ausgewählt ist aus der Gruppe bestehend aus Zink, Zinn, Indium und Kombinationen hiervon. Bevorzugt weist die Bekeimungsschicht eine Höhe, in einer Richtung senkrecht auf die Oberseite und/oder Unterseite der Bekeimungsschicht, im Bereich von > 0 und < 1 µm auf.

Abgesehen davon kann die erste flächige Metallstruktur eine Höhe, in einer Richtung senkrecht auf die Oberseite und/oder Unterseite der ersten flächigen Metallstruktur, im Bereich von 1 bis 100 µm, bevorzugt 5 bis 50 µm, besonders bevorzugt 10 bis 40 µm, aufweisen.

Zudem kann die erste flächige Metallstruktur eine Oberflächenstrukturierung auf der Oberseite und/oder Unterseite aufweisen, wobei die Oberflächenstrukturierung bevorzugt ausgewählt ist aus der Gruppe bestehend aus gebürstete Oberflächenstrukturierung, geriffelte Oberflächenstrukturierung, geprägte Oberflächenstrukturierung, geätzte Oberflächenstrukturierung, gelaserte Oberflächenstrukturierung und Kombinationen hiervon.

In der erfindungsgemäßen negativen Elektrode kann die zweite flächige Metallstruktur ausgewählt ist aus der Gruppe bestehend aus Metallfolie, Streckmetall, Lochblech, Metallnetz und Kombinationen hiervon.

Ferner kann die zweite flächige Metallstruktur auf der Oberseite und/oder Unterseite eine Bekeimungsschicht aufweisen und diese Bekeimungsschicht kontaktieren. Die Bekeimungsschicht kann ein Metall enthalten oder daraus bestehen, das ausgewählt ist aus der Gruppe bestehend aus Zink, Zinn, Indium und Kombinationen hiervon. Bevorzugt weist die Bekeimungsschicht eine Höhe, in einer Richtung senkrecht auf die Oberseite und/oder Unterseite der Bekeimungsschicht, im Bereich von > 0 und < 1 µm auf.

Darüber hinaus kann die zweite flächige Metallstruktur in einer Richtung senkrecht auf die Oberseite und/oder Unterseite der zweiten flächigen Metallstruktur, eine Höhe im Bereich von 1 bis 100 µm, bevorzugt 2 bis 50 µm, besonders bevorzugt 5 bis 40 µm, optional 10 bis 20 µm, aufweisen.

Abgesehen davon kann die zweite flächige Metallstruktur eine Oberflächenstrukturierung auf der Oberseite und/oder Unterseite aufweisen, wobei die Oberflächenstrukturierung bevorzugt ausgewählt ist aus der Gruppe bestehend aus gebürstete Oberflächenstrukturierung, geriffelte Oberflächenstrukturierung, geprägte Oberflächenstrukturierung, geätzte Oberflächenstrukturierung, gelaserte Oberflächenstrukturierung und Kombinationen hiervon.

Die Kohlenstoffbeschichtung der negativen Elektrode, optional auch eine weitere Kohlenstoffbeschichtung, die auf die Unterseite der zweiten flächigen Metallstruktur aufgebracht ist, kann einen Kohlenstoff enthalten oder daraus bestehen, der ausgewählt ist aus der Gruppe bestehend aus Aktivkohle, Graphit, Graphen, Leitruß, Kohlenstoffnanoröhrechen, Kohlenstoffnanodrähte, Kohlenstoff C65, Kohlenstoff C45 und Kombinationen hiervon.

Ferner kann die Kohlenstoffbeschichtung, optional auch eine weitere Kohlenstoffbeschichtung, die auf die Unterseite der zweiten flächigen Metallstruktur aufgebracht ist, eine Höhe im Bereich von 1 bis 100 µm, bevorzugt im Bereich von 2 bis 50 µm, besonders bevorzugt im Bereich von 5 bis 40 µm, aufweisen.

Die erfindungsgemäße negative Elektrode kann durch das erfindungsgemäße Verfahren hergestellt sein. Folglich kann die negative Elektrode mindestens ein Merkmal aufweisen, dass sich zwangsweise aus der Durchführung des erfindungsgemäßen Verfahrens ergibt.

Beispielsweise kann die negative Elektrode dadurch gekennzeichnet sein, dass die erste flächigen Metallstruktur in die Kohlenstoffbeschichtung der zweiten flächigen Metallstruktur durch ein Ausüben eines mechanischen Drucks von mindestens 390 kg/cm², bevorzugt im Bereich von 2500 bis 6000 kg/cm², auf die Oberseite der ersten flächigen Metallstruktur, eingepresst ist. Besonders bevorzugt wurde der mechanische Druck über eine Kalthebelpresse für eine Dauer von 10 bis 20 Sekunden bei einer Temperatur im Bereich von 20 bis 30 °C appliziert.

Erfindungsgemäß wird ferner eine galvanische Zelle bereitgestellt, die eine erfindungsgemäße negative Elektrode, eine Kathode und einen Elektrolyten enthält. Bevorzugt enthält die galvanische Zelle ferner einen Separator, der zwischen der erfindungsgemäßen negativen Elektrode und der Kathode angeordnet ist. Besonders bevorzugt ist dem Separator eine flächige Metallstruktur, die Aluminium enthält oder daraus besteht, oder eine weitere Kohlenstoffbeschichtung der Elektrode, zugewandt.

Es wird ferner die Verwendung der erfindungsgemäßen galvanischen Zelle zur Energieversorgung
i) einer mobilen Vorrichtung, bevorzugt eines Mobiltelefons, eines Kopfhörers, eines Fahrzeugs, eines Flugzeugs und/oder eines Schiffs; und/oder
ii) einer stationären Vorrichtung, bevorzugt eines Gebäudes; und/oder
iii) eines medizinischen Geräts, bevorzugt eines Hörgeräts und/oder eines Herzschrittmachers;
vorgeschlagen.

Anhand der nachfolgenden Figuren soll der erfindungsgemäße Gegenstand näher erläutert werden, ohne diesen auf die hier dargestellten, spezifischen Ausgestaltungsformen einschränken zu wollen.

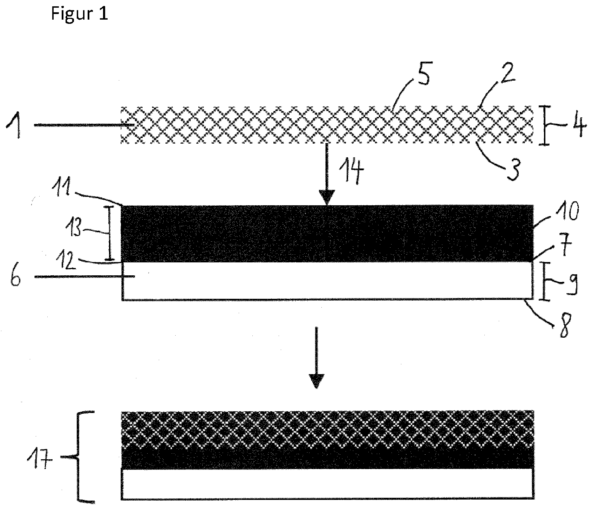

Figur 1 zeigt eine erste Variante des erfindungsgemäßen Verfahrens. In dieser Variante wird eine negative Elektrode hergestellt, die als C-Al-Anode 17 (hier: Graphit-Aluminiumstreckmetall-Komposit) beschrieben werden kann. Zunächst wird eine Kohlenstoffschicht 10 (hier: Graphitschicht) auf der Oberseite 7 einer zweiten flächige Metallstruktur 6 (hier: Kupfer-Ableiterfolie) angeordnet (z.B. durch Sprühen oder Rakeln). Anschließend wird eine erste flächige Metallstruktur 1, die hier aus Aluminium besteht und durchgängige Öffnungen 5 aufweist, d.h. eine löchrige Aluminiumstreckmetallfolie ist, auf der Kohlenstoffschicht 10 positioniert und durch Verpressen 14 in die Kohlenstoffschicht 10 eingepresst, wodurch sich die durchgängigen Öffnungen 5 der ersten flächigen Metallstruktur 1 zumindest bereichsweise mit dem Kohlenstoff der Kohlenstoffschicht 10 füllen und eine C-Al-Anode 17 entsteht. Die C-Al-Anode 17 weist durch den Graphitbeitrag sowohl Hochleistungseigenschaften als auch durch den Aluminiumbeitrag Hochenergieeigenschaften auf. Das Verfahren stellt somit eine negative Elektrode bereit, die eine hohe Zykelfestigkeit und eine hohe Energiedichte aufweist. Zudem ist das Verfahren einfach und kostengünstig durchführbar.

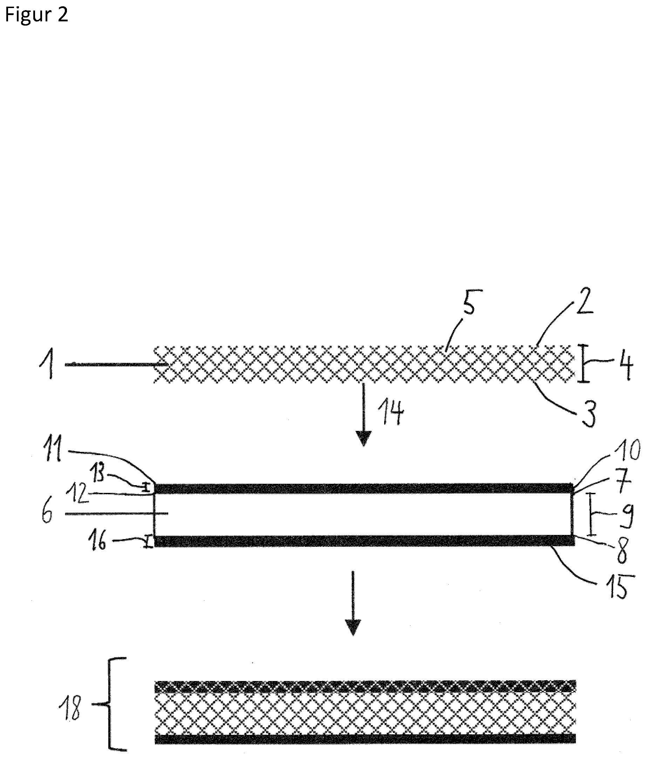

Figur 2 zeigt eine zweite Variante des erfindungsgemäßen Verfahrens. In dieser Variante des Verfahrens wird eine negative Elektrode hergestellt, die als C-Al-C-Anode 18 (hier: beidseitig graphitisierten Aluminiumfolie) beschrieben werden kann. Zunächst wird eine erste Kohlenstoffschicht 10 (hier: Graphitschicht) auf der Oberseite 7 einer zweiten flächige Metallstruktur 6, die hier aus Aluminium besteht, d.h. eine Aluminiumfolie ist, angeordnet und eine zweite Kohlenstoffschicht 15 auf der Unterseite 8 der zweiten flächigen Metallstruktur 6 angeordnet (z.B. durch Sprühen oder Rakeln). Anschließend wird eine erste flächige Metallstruktur 1 (hier: Edelstahlgewebe 1), die durchgängige Öffnungen 5 aufweist und später als Stromableiter dient, auf der ersten Kohlenstoffschicht 10 positioniert und durch Verpressen 14 in die erste Kohlenstoffschicht 10 und zudem in die zweiten flächige Metallstruktur 6 eingepresst, wodurch sich die durchgängigen Öffnungen 5 der ersten flächigen Metallstruktur 1 zumindest bereichsweise mit dem Kohlenstoff der Kohlenstoffschicht 10 und dem Aluminium der zweiten flächigen Metallstruktur 6 füllen und eine C-Al-C-Anode 18 entsteht. Die C-Al-C-Anode 18 weist durch den Graphitbeitrag sowohl Hochleistungseigenschaften als auch durch den Aluminiumbeitrag Hochenergieeigenschaften auf. Das Verfahren stellt somit eine negative Elektrode bereit, die eine hohe Zykelfestigkeit und eine hohe Energiedichte aufweist. Die Zykelstabilität ist gegenüber der in Figur 1 gezeigten C-Al-Anode sogar noch weiter verbessert, da die beidseitig vorhandene Graphitschicht 3 einen Zerfall von Aluminium verhindern kann. Zudem ist auch diese Variante des Verfahrens einfach und kostengünstig durchführbar.

### Bezugszeichenliste:

- 1:: erste flächige Metallstruktur;
- 2:: Oberseite der ersten flächigen Metallstruktur;
- 3:: Unterseite der ersten flächigen Metallstruktur;
- 4:: Höhe der ersten flächigen Metallstruktur;
- 5:: Durchgängige Öffnung(en) der ersten flächigen Metallstruktur;
- 6:: zweite flächige Metallstruktur;
- 7:: Oberseite der zweiten flächigen Metallstruktur;
- 8:: Unterseite der zweiten flächigen Metallstruktur;
- 9:: Höhe der zweiten flächigen Metallstruktur;
- 10:: erste Kohlenstoffschicht (bzw. Kohlenstoffbeschichtung) auf Oberseite der zweiten flächigen Metallstruktur;
- 11:: Oberseite der ersten Kohlenstoffbeschichtung;
- 12:: Unterseite der ersten Kohlenstoffbeschichtung;
- 13:: Höhe der ersten Kohlenstoffbeschichtung;
- 14:: Einpressen der ersten flächigen Metallstruktur zumindest in die erste Kohlenstoffbeschichtung;
- 15:: zweite (bzw. weitere) Kohlenstoffschicht (bzw. Kohlenstoffbeschichtung) auf der Unterseite der zweiten flächigen Metallstruktur;
- 16:: Höhe der zweiten (bzw. weiteren) Kohlenstoffbeschichtung;
- 17:: erste negative Elektrode (C-Al-Anode);
- 18:: zweite negative Elektrode (C-Al-C-Anode).

## Patentansprüche

1. Verfahren zur Herstellung einer negativen Elektrode für eine galvanische Zelle, umfassend
a) Bereitstellen einer ersten flächigen Metallstruktur, die eine flächige Oberseite und eine flächige Unterseite aufweist und in einer Richtung senkrecht zur Oberseite und Unterseite eine bestimmte Höhe aufweist, wobei die erste flächige Metallstruktur an ihrer flächigen Unterseite eine Vielzahl von Öffnungen aufweist, die sich von der Unterseite in Richtung der Oberseite der ersten flächigen Metallstruktur erstrecken;
b) Bereitstellen einer zweiten flächigen Metallstruktur, die eine flächige Oberseite und eine flächige Unterseite aufweist und in einer Richtung senkrecht zur Oberseite und Unterseite eine bestimmte Höhe aufweist, wobei zumindest die Oberseite der zweiten flächigen Metallstruktur eine Kohlenstoffbeschichtung aufweist, wobei die Kohlenstoffbeschichtung eine flächige Oberseite und eine flächige Unterseite aufweist und in einer Richtung senkrecht zur Oberseite und Unterseite eine bestimmte Höhe aufweist, wobei die Unterseite der Kohlenstoffbeschichtung die Oberseite der zweiten flächigen Metallstruktur kontaktiert;
**dadurch gekennzeichnet, dass** die erste flächige Metallstruktur zumindest in die Kohlenstoffbeschichtung der zweiten flächigen Metallstruktur eingepresst wird und sich die Vielzahl von Öffnungen an der flächigen Unterseite der ersten flächigen Metallstruktur zumindest bereichsweise mit Kohlenstoff der Kohlenstoffbeschichtung der zweiten flächigen Metallstruktur füllen, wobei die erste flächige Metallstruktur oder die zweite flächige Metallstruktur Aluminium oder eine Aluminiumlegierung enthält oder daraus besteht.

2. Verfahren gemäß Anspruch 1, **dadurch gekennzeichnet, dass** die erste flächige Metallstruktur Aluminium oder eine Aluminiumlegierung enthält oder daraus besteht, wobei die Aluminiumlegierung bevorzugt mindestens 50 Gew.-% Aluminium enthält, und die zweite flächige Metallstruktur ein Metall enthält oder daraus besteht, das eine höhere Vickershärte aufweist als Aluminium, wobei die erste flächige Metallstruktur über eine Strecke in die Kohlenstoffbeschichtung der zweiten flächigen Metallstruktur eingepresst wird, die maximal der bestimmten Höhe der Kohlenstoffbeschichtung entspricht, wobei die zweite flächige Metallstruktur optional ein Metall enthält oder daraus besteht, das ausgewählt ist aus der Gruppe bestehend aus Nickel, Kupfer, Edelstahl und Kombinationen und Legierungen hiervon, wobei das Metall bevorzugt Kupfer enthält oder daraus besteht, wobei die zweite flächige Metallstruktur insbesondere eine Kupferfolie ist.

3. Verfahren gemäß Anspruch 1, **dadurch gekennzeichnet, dass** die erste flächige Metallstruktur ein Metall enthält oder daraus besteht, das eine höhere Vickershärte aufweist als Aluminium, und die zweite flächige Metallstruktur Aluminium oder eine Aluminiumlegierung enthält oder daraus besteht, wobei die Aluminiumlegierung bevorzugt mindestens 50 Gew.-% Aluminium enthält, wobei die erste flächige Metallstruktur über eine Strecke in die Kohlenstoffbeschichtung der zweiten flächigen Metallstruktur eingepresst wird, die mindestens der bestimmten Höhe der Kohlenstoffbeschichtung entspricht, wobei die Strecke bevorzugt mindestens einer Summe der bestimmten Höhe der Kohlenstoffbeschichtung und der bestimmten Höhe der zweiten flächigen Metallstruktur entspricht und sich die Vielzahl von Öffnungen an der Unterseite der ersten flächigen Metallstruktur zusätzlich mit Aluminium oder der Aluminiumlegierung der zweiten flächigen Metallstruktur füllen, wobei die Strecke besonders bevorzugt einer Summe der bestimmten Höhe der Kohlenstoffbeschichtung, der bestimmten Höhe der zweiten flächigen Metallstruktur und einer bestimmten Höhe einer weiteren Kohlenstoffbeschichtung, die auf die Unterseite der zweiten flächigen Metallstruktur aufgebracht wird oder ist, entspricht und sich die Vielzahl von Öffnungen an der Unterseite der ersten flächigen Metallstruktur zusätzlich mit Kohlenstoff der weiteren Kohlenstoffbeschichtung füllen, wobei die erste flächige Metallstruktur optional ein Metall enthält oder daraus besteht, das ausgewählt ist aus der Gruppe bestehend aus Nickel, Kupfer, Edelstahl und Kombinationen und Legierungen hiervon, wobei das Metall bevorzugt Edelstahl enthält oder daraus besteht, wobei die erste flächige Metallstruktur insbesondere ein Edelstahlnetz mit einer Vielzahl von Öffnungen an der Unterseite des Edelstahlnetzes, ein Edelstahlstreckmetall mit einer Vielzahl von Öffnungen an der Unterseite des Edelstahlstreckmetalls oder eine Edelstahlfolie mit einer Vielzahl von Öffnungen an der Unterseite der Edelstahlfolie ist.

4. Verfahren gemäß einem der vorhergehenden Ansprüche, **dadurch gekennzeichnet, dass** die erste flächige Metallstruktur
i) eine Vielzahl durchgängiger Öffnungen aufweist, die sich von der Unterseite bis zur Oberseite der ersten flächigen Metallstruktur erstrecken; und/oder
ii) ausgewählt ist aus der Gruppe bestehend aus Metallfolie, Streckmetall, Lochblech, Metallnetz und Kombinationen hiervon; und/oder
iii) auf der Oberseite und/oder Unterseite eine Bekeimungsschicht aufweist und diese Bekeimungsschicht kontaktiert, wobei die Bekeimungsschicht ein Metall enthält oder daraus besteht, das ausgewählt ist aus der Gruppe bestehend aus Zink, Zinn, Indium und Kombinationen hiervon, wobei die Bekeimungsschicht bevorzugt eine Höhe, in einer Richtung senkrecht auf die Oberseite und/oder Unterseite der Bekeimungsschicht, im Bereich von > 0 und < 1 µm aufweist; und/oder
iv) eine Höhe, in einer Richtung senkrecht auf die Oberseite und/oder Unterseite der ersten flächigen Metallstruktur, im Bereich von 1 bis 100 µm, bevorzugt 5 bis 50 µm, besonders bevorzugt 10 bis 40 µm, aufweist; und/oder
v) eine Oberflächenstrukturierung auf der Oberseite und/oder Unterseite aufweist, wobei die Oberflächenstrukturierung bevorzugt ausgewählt ist aus der Gruppe bestehend aus gebürstete Oberflächenstrukturierung, geriffelte Oberflächenstrukturierung, geprägte Oberflächenstrukturierung, geätzte Oberflächenstrukturierung, gelaserte Oberflächenstrukturierung und Kombinationen hiervon.

5. Verfahren gemäß einem der vorhergehenden Ansprüche, **dadurch gekennzeichnet, dass** die zweite flächige Metallstruktur
i) ausgewählt ist aus der Gruppe bestehend aus Metallfolie, Streckmetall, Lochblech, Metallnetz und Kombinationen hiervon; und/oder
ii) auf der Oberseite und/oder Unterseite eine Bekeimungsschicht aufweist und diese Bekeimungsschicht kontaktiert, wobei die Bekeimungsschicht ein Metall enthält oder daraus besteht, das ausgewählt ist aus der Gruppe bestehend aus Zink, Zinn, Indium und Kombinationen hiervon, wobei die Bekeimungsschicht bevorzugt eine Höhe, in einer Richtung senkrecht auf die Oberseite und/oder Unterseite der Bekeimungsschicht, im Bereich von > 0 und < 1 µm aufweist; und/oder
iii) in einer Richtung senkrecht auf die Oberseite und/oder Unterseite der zweiten flächigen Metallstruktur, eine Höhe im Bereich von 1 bis 100 µm, bevorzugt 2 bis 50 µm, besonders bevorzugt 5 bis 40 µm, optional 10 bis 20 µm, aufweist; und/oder
iv) eine Oberflächenstrukturierung auf der Oberseite und/oder Unterseite aufweist, wobei die Oberflächenstrukturierung bevorzugt ausgewählt ist aus der Gruppe bestehend aus gebürstete Oberflächenstrukturierung, geriffelte Oberflächenstrukturierung, geprägte Oberflächenstrukturierung, geätzte Oberflächenstrukturierung, gelaserte Oberflächenstrukturierung und Kombinationen hiervon.

6. Verfahren gemäß einem der vorhergehenden Ansprüche, **dadurch gekennzeichnet, dass** die Kohlenstoffbeschichtung, optional auch eine weitere Kohlenstoffbeschichtung, die auf die Unterseite der zweiten flächigen Metallstruktur aufgebracht wird oder ist,
i) einen Kohlenstoff enthält oder daraus besteht, der ausgewählt ist aus der Gruppe bestehend aus Aktivkohle, Graphit, Graphen, Leitruß, Kohlenstoffnanoröhrechen, Kohlenstoffnanodrähte, Kohlenstoff C65, Kohlenstoff C45 und Kombinationen hiervon; und/oder
ii) eine Höhe im Bereich von 1 bis 100 µm, bevorzugt im Bereich von 2 bis 50 µm, besonders bevorzugt im Bereich von 5 bis 40 µm, aufweist.

7. Verfahren gemäß einem der vorhergehenden Ansprüche, **dadurch gekennzeichnet, dass** das Einpressen der ersten flächigen Metallstruktur in die Kohlenstoffbeschichtung der zweiten flächigen Metallstruktur ein Ausüben eines mechanischen Drucks von mindestens 390 kg/cm², bevorzugt im Bereich von 2500 bis 6000 kg/cm², auf die Oberseite der ersten flächigen Metallstruktur umfasst oder daraus besteht, wobei der mechanische Druck besonders bevorzugt über eine Kalthebelpresse für eine Dauer von 10 bis 20 Sekunden bei einer Temperatur im Bereich von 20 bis 30 °C appliziert wird.

8. Negative Elektrode für eine galvanische Zelle, enthaltend oder bestehend aus:
a) eine erste flächige Metallstruktur, die eine flächige Oberseite und eine flächige Unterseite aufweist und in einer Richtung senkrecht zur Oberseite und Unterseite eine bestimmte Höhe aufweist, wobei die erste flächige Metallstruktur eine Vielzahl von Öffnungen an ihrer Unterseite aufweist, die sich von der Unterseite in Richtung der Oberseite der ersten flächigen Metallstruktur erstrecken;
b) eine zweite flächige Metallstruktur, die eine flächige Oberseite und eine flächige Unterseite aufweist und in einer Richtung senkrecht zur Oberseite und Unterseite eine bestimmte Höhe aufweist, wobei zumindest die Oberseite der zweiten flächigen Metallstruktur eine Kohlenstoffbeschichtung aufweist, wobei die Kohlenstoffbeschichtung eine flächige Oberseite und eine flächige Unterseite aufweist und in einer Richtung senkrecht zur Oberseite und Unterseite eine bestimmte Höhe aufweist, wobei die Unterseite der Kohlenstoffbeschichtung die Oberseite der zweiten flächigen Metallstruktur kontaktiert;
**dadurch gekennzeichnet, dass** die erste flächigen Metallstruktur in die Kohlenstoffbeschichtung der zweiten flächigen Metallstruktur eingepresst ist, sodass die Vielzahl von Öffnungen an der Unterseite der ersten flächigen Metallstruktur zumindest bereichsweise zumindest mit Kohlenstoff der Kohlenstoffbeschichtung der zweiten flächigen Metallstruktur gefüllt sind, wobei die erste flächige Metallstruktur oder die zweite flächige Metallstruktur Aluminium oder eine Aluminiumlegierung enthält oder daraus besteht.

9. Elektrode gemäß Anspruch 8, **dadurch gekennzeichnet, dass** die erste flächige Metallstruktur Aluminium oder eine Aluminiumlegierung enthält oder daraus besteht, wobei die Aluminiumlegierung bevorzugt mindestens 50 Gew.-% Aluminium enthält, und die zweite flächige Metallstruktur ein Metall enthält oder daraus besteht, das eine höhere Vickershärte aufweist als Aluminium, wobei die erste flächige Metallstruktur über eine Strecke in die Kohlenstoffbeschichtung der zweiten flächigen Metallstruktur eingepresst ist, die maximal der bestimmten Höhe der Kohlenstoffbeschichtung entspricht, wobei die zweite flächige Metallstruktur optional ein Metall enthält oder daraus besteht, das ausgewählt ist aus der Gruppe bestehend aus Nickel, Kupfer, Edelstahl und Kombinationen und Legierungen hiervon, wobei das Metall bevorzugt Kupfer enthält oder daraus besteht.

10. Elektrode gemäß Anspruch 8, **dadurch gekennzeichnet, dass** die erste flächige Metallstruktur ein Metall enthält oder daraus besteht, das eine höhere Vickershärte aufweist als Aluminium, und die zweite flächige Metallstruktur Aluminium oder eine Aluminiumlegierung enthält oder daraus besteht, wobei die Aluminiumlegierung bevorzugt mindestens 50 Gew.-% Aluminium enthält, wobei die erste flächige Metallstruktur über eine Strecke in die Kohlenstoffbeschichtung der zweiten flächigen Metallstruktur eingepresst ist, die mindestens der bestimmten Höhe der Kohlenstoffbeschichtung entspricht, wobei die Strecke bevorzugt mindestens einer Summe der bestimmten Höhe der Kohlenstoffbeschichtung und der bestimmten Höhe der zweiten flächigen Metallstruktur entspricht und die Vielzahl von Öffnungen an der Unterseite der ersten flächigen Metallstruktur zusätzlich mit Aluminium oder der Aluminiumlegierung der zweiten flächigen Metallstruktur gefüllt sind, wobei die Strecke besonders bevorzugt einer Summe der bestimmten Höhe der Kohlenstoffbeschichtung, der bestimmten Höhe der zweiten flächigen Metallstruktur und einer bestimmten Höhe einer weiteren Kohlenstoffbeschichtung, die auf die Unterseite der zweiten flächigen Metallstruktur aufgebracht ist, entspricht und die Vielzahl von Öffnungen an der Unterseite der ersten flächigen Metallstruktur zusätzlich mit Kohlenstoff der weiteren Kohlenstoffbeschichtung gefüllt sind, wobei die erste flächige Metallstruktur ein Metall enthält oder daraus besteht, das ausgewählt ist aus der Gruppe bestehend aus Nickel, Kupfer, Edelstahl und Kombinationen und Legierungen hiervon, wobei das Metall bevorzugt Edelstahl enthält oder daraus besteht, wobei die erste flächige Metallstruktur insbesondere ein Edelstahlnetz mit einer Vielzahl von Öffnungen an der Unterseite des Edelstahlnetzes, ein Edelstahlstreckmetall mit einer Vielzahl von Öffnungen an der Unterseite des Edelstahlstreckmetalls oder eine Edelstahlfolie mit einer Vielzahl von Öffnungen an der Unterseite der Edelstahlfolie ist.

11. Elektrode gemäß einem der Ansprüche 8 bis 10, **dadurch gekennzeichnet, dass** die erste flächige Metallstruktur
i) eine Vielzahl durchgängiger Öffnungen aufweist, die sich von der Unterseite bis zur Oberseite der ersten flächigen Metallstruktur erstrecken; und/oder
ii) ausgewählt ist aus der Gruppe bestehend aus Metallfolie, Streckmetall, Lochblech, Metallnetz und Kombinationen hiervon; und/oder
iii) auf der Oberseite und/oder Unterseite eine Bekeimungsschicht aufweist und diese Bekeimungsschicht kontaktiert, wobei die Bekeimungsschicht ein Metall enthält oder daraus besteht, das ausgewählt ist aus der Gruppe bestehend aus Zink, Zinn, Indium und Kombinationen hiervon, wobei die Bekeimungsschicht bevorzugt eine Höhe, in einer Richtung senkrecht auf die Oberseite und/oder Unterseite der Bekeimungsschicht, im Bereich von > 0 und < 1 µm aufweist; und/oder
iv) eine Höhe, in einer Richtung senkrecht auf die Oberseite und/oder Unterseite der ersten flächigen Metallstruktur, im Bereich von 1 bis 100 µm, bevorzugt 5 bis 50 µm, besonders bevorzugt 10 bis 40 µm, aufweist; und/oder
v) eine Oberflächenstrukturierung auf der Oberseite und/oder Unterseite aufweist, wobei die Oberflächenstrukturierung bevorzugt ausgewählt ist aus der Gruppe bestehend aus gebürstete Oberflächenstrukturierung, geriffelte Oberflächenstrukturierung, geprägte Oberflächenstrukturierung, geätzte Oberflächenstrukturierung, gelaserte Oberflächenstrukturierung und Kombinationen hiervon.

12. Elektrode gemäß einem der Ansprüche 8 bis 11, **dadurch gekennzeichnet, dass** die zweite flächige Metallstruktur
i) ausgewählt ist aus der Gruppe bestehend aus Metallfolie, Streckmetall, Lochblech, Metallnetz und Kombinationen hiervon; und/oder
ii) auf der Oberseite und/oder Unterseite eine Bekeimungsschicht aufweist und diese Bekeimungsschicht kontaktiert, wobei die Bekeimungsschicht ein Metall enthält oder daraus besteht, das ausgewählt ist aus der Gruppe bestehend aus Zink, Zinn, Indium und Kombinationen hiervon, wobei die Bekeimungsschicht bevorzugt eine Höhe, in einer Richtung senkrecht auf die Oberseite und/oder Unterseite der Bekeimungsschicht, im Bereich von > 0 und < 1 µm aufweist; und/oder
iii) in einer Richtung senkrecht auf die Oberseite und/oder Unterseite der zweiten flächigen Metallstruktur, eine Höhe im Bereich von 1 bis 100 µm, bevorzugt 2 bis 50 µm, besonders bevorzugt 5 bis 40 µm, optional 10 bis 20 µm, aufweist; und/oder
iv) eine Oberflächenstrukturierung auf der Oberseite und/oder Unterseite aufweist, wobei die Oberflächenstrukturierung bevorzugt ausgewählt ist aus der Gruppe bestehend aus gebürstete Oberflächenstrukturierung, geriffelte Oberflächenstrukturierung, geprägte Oberflächenstrukturierung, geätzte Oberflächenstrukturierung, gelaserte Oberflächenstrukturierung und Kombinationen hiervon.

13. Elektrode gemäß einem der Ansprüche 8 bis 12, **dadurch gekennzeichnet, dass** die Kohlenstoffbeschichtung, optional auch eine weitere Kohlenstoffbeschichtung, die auf die Unterseite der zweiten flächigen Metallstruktur aufgebracht ist,
i) einen Kohlenstoff enthält oder daraus besteht, der ausgewählt ist aus der Gruppe bestehend aus Aktivkohle, Graphit, Graphen, Leitruß, Kohlenstoffnanoröhrechen, Kohlenstoffnanodrähte, Kohlenstoff C65, Kohlenstoff C45 und Kombinationen hiervon; und/oder
ii) eine Höhe im Bereich von 1 bis 100 µm, bevorzugt im Bereich von 2 bis 50 µm, besonders bevorzugt im Bereich von 5 bis 40 µm, aufweist.

14. Galvanische Zelle, enthaltend eine negative Elektrode gemäß einem der Ansprüche 8 bis 13, eine Kathode und einen Elektrolyten, wobei die galvanische Zelle bevorzugt ferner einen Separator enthält, der zwischen der negativen Elektrode und der Kathode angeordnet ist, wobei besonders bevorzugt dem Separator eine flächige Metallstruktur, die Aluminium enthält oder daraus besteht, oder eine weitere Kohlenstoffbeschichtung der Elektrode zugewandt ist.

15. Verwendung der galvanischen Zelle gemäß Anspruch 14 zur Energieversorgung
i) einer mobilen Vorrichtung, bevorzugt eines Mobiltelefons, eines Kopfhörers, eines Fahrzeugs, eines Flugzeugs und/oder eines Schiffs; und/oder
ii) einer stationären Vorrichtung, bevorzugt eines Gebäudes; und/oder
iii) eines medizinischen Geräts, bevorzugt eines Hörgeräts und/oder eines Herzschrittmachers.

## Claims

1. A method for producing a negative electrode for a galvanic cell, comprising the steps of
a) providing a first planar metal structure, which has a planar top side and a planar underside and has a specific height in a direction perpendicular to the top side and underside, wherein the first planar metal structure has a plurality of openings on its planar underside, which extend from the underside in the direction of the top side of the first planar metal structure;
b) providing a second planar metal structure, which has a planar top side and a planar underside and has a specific height in a direction perpendicular to the top side and underside, wherein at least the top side of the second planar metal structure has a carbon coating, wherein the carbon coating has a planar top side and a planar underside and has a specific height in a direction perpendicular to the top side and underside, wherein the underside of the carbon coating contacts the top side of the second planar metal structure;
**characterized in that** the first planar metal structure is pressed at least into the carbon coating of the second planar metal structure and the plurality of openings on the planar underside of the first planar metal structure, at least in some regions, fill with carbon of the carbon coating of the second planar metal structure, wherein the first planar metal structure or the second planar metal structure comprises or consists of aluminium or an aluminium alloy.

2. The method according to claim 1, **characterized in that** the first planar metal structure comprises or consists of aluminium or an aluminium alloy, wherein the aluminium alloy preferably comprises at least 50 wt.% aluminium, and the second planar metal structure comprises or consists of a metal that has a higher Vickers hardness than aluminium, wherein the first planar metal structure is pressed into the carbon coating of the second planar metal structure over a distance that corresponds at most to the specific height of the carbon coating, wherein the second planar metal structure optionally comprises or consists of a metal that is selected from the group consisting of nickel, copper, stainless steel and combinations and alloys thereof, wherein the metal preferably comprises or consists of copper, wherein the second planar metal structure is, in particular, a copper foil.

3. The method according to claim 1, **characterized in that** the first planar metal structure comprises or consists of a metal that has a higher Vickers hardness than aluminium, and the second planar metal structure comprises or consists of aluminium or an aluminium alloy, wherein the aluminium alloy preferably comprises at least 50 wt.% aluminium, wherein the first planar metal structure is pressed into the carbon coating of the second planar metal structure over a distance that corresponds at least to the specific height of the carbon coating, wherein the distance preferably corresponds at least to a sum of the specific height of the carbon coating and the specific height of the second planar metal structure, and the plurality of openings on the underside of the first planar metal structure additionally fill with aluminium or the aluminium alloy of the second planar metal structure, wherein the distance corresponds particularly preferably to a sum of the specific height of the carbon coating, the specific height of the second planar metal structure and a specific height of a further carbon coating which is or already is applied to the underside of the second planar metal structure, and the plurality of openings on the underside of the first planar metal structure additionally fill with carbon of the further carbon coating, wherein the first planar metal structure optionally comprises or consists of a metal that is selected from the group consisting of nickel, copper, stainless steel and combinations and alloys thereof, wherein the metal preferably comprises or consists of stainless steel, wherein the first planar metal structure is, in particular, a stainless steel mesh with a plurality of openings on the underside of the stainless steel mesh, a stainless steel expanded metal with a plurality of openings on the underside of the stainless steel expanded metal or a stainless steel foil with a plurality of openings on the underside of the stainless steel foil.

4. The method according to any one of the preceding claims, **characterized in that** the first planar metal structure
i) has a plurality of continuous openings, which extend from the underside to the top side of the first planar metal structure; and/or
ii) is selected from the group consisting of metal foil, expanded metal, perforated sheet metal, metal mesh and combinations thereof; and/or
iii) has a seed layer on the top side and/or underside and contacts this seed layer, wherein the seed layer comprises or consists of a metal that is selected from the group consisting of zinc, tin, indium and combinations thereof, wherein the seed layer preferably has a height, in a direction perpendicular to the top side and/or underside of the seed layer, in the range of from > 0 to < 1 µm; and/or
iv) has a height, in a direction perpendicular to the top side and/or underside of the first planar metal structure, in the range of from 1 to 100 µm, preferably 5 to 50 µm, particularly preferably 10 to 40 µm; and/or
v) has a surface structuring on the top side and/or underside, wherein the surface structuring is preferably selected from the group consisting of brushed surface structuring, grooved surface structuring, embossed surface structuring, etched surface structuring, lasered surface structuring and combinations thereof.

5. The method according to any one of the preceding claims, **characterized in that** the second planar metal structure
i) is selected from the group consisting of metal foil, expanded metal, perforated sheet metal, metal mesh and combinations thereof; and/or
ii) has a seed layer on the top side and/or underside and contacts this seed layer, wherein the seed layer comprises or consists of a metal that is selected from the group consisting of zinc, tin, indium and combinations thereof, wherein the seed layer preferably has a height, in a direction perpendicular to the top side and/or underside of the seed layer, in the range of from > 0 to < 1 µm; and/or
iii) has a height, in a direction perpendicular to the top side and/or underside of the second planar metal structure, in the range of from 1 to 100 µm, preferably 2 to 50 µm, particularly preferably 5 to 40 µm, optionally 10 to 20 µm; and/or
iv) has a surface structuring on the top side and/or underside, wherein the surface structuring is preferably selected from the group consisting of brushed surface structuring, grooved surface structuring, embossed surface structuring, etched surface structuring, lasered surface structuring and combinations thereof.

6. The method according to any one of the preceding claims, **characterized in that** the carbon coating, optionally also a further carbon coating that is or is already applied to the underside of the second planar metal structure,
i) comprises or consists of a carbon that is selected from the group consisting of activated carbon, graphite, graphene, conductive carbon black, carbon nanotubes, carbon nanowires, carbon C65, carbon C45 and combinations thereof; and/or
ii) has a height in the range of from 1 to 100 µm, preferably in the range of from 2 to 50 µm, particularly preferably in the range of from 5 to 40 µm.

7. The method according to any one of the preceding claims, **characterized in that** the pressing of the first planar metal structure into the carbon coating of the second planar metal structure comprises or consists of an exertion of a mechanical pressure of at least 390 kg/cm², preferably in the range of from 2500 to 6000 kg/cm², onto the top side of the first planar metal structure, wherein the mechanical pressure is particularly preferably applied via a cold lever press for a duration of from 10 to 20 seconds at a temperature in the range of from 20 to 30°C.

8. A negative electrode for a galvanic cell, said electrode comprising or consisting of:
a) a first planar metal structure, which has a planar top side and a planar underside and has a specific height in a direction perpendicular to the top side and underside, wherein the first planar metal structure has a plurality of openings on its underside, which extend from the underside in the direction of the top side of the first planar metal structure;
b) a second planar metal structure, which has a planar top side and a planar underside and has a specific height in a direction perpendicular to the top side and underside, wherein at least the top side of the second planar metal structure has a carbon coating, wherein the carbon coating has a planar top side and a planar underside and has a specific height in a direction perpendicular to the top side and underside, wherein the underside of the carbon coating contacts the top side of the second planar metal structure;
**characterized in that** the first planar metal structure is pressed into the carbon coating of the second planar metal structure so that the plurality of openings on the underside of the first planar metal structure, at least in some regions, are filled at least with carbon of the carbon coating of the second planar metal structure, wherein the first planar metal structure or the second planar metal structure comprises or consists of aluminium or an aluminium alloy.

9. The electrode according to claim 8, **characterized in that** the first planar metal structure comprises or consists of aluminium or an aluminium alloy, wherein the aluminium alloy preferably comprises at least 50 wt.% aluminium, and the second planar metal structure comprises or consists of a metal that has a higher Vickers hardness than aluminium, wherein the first planar metal structure is pressed into the carbon coating of the second planar metal structure over a distance that corresponds at most to the specific height of the carbon coating, wherein the second planar metal structure optionally comprises or consists of a metal that is selected from the group consisting of nickel, copper, stainless steel and combinations and alloys thereof, wherein the metal preferably comprises or consists of copper.

10. The electrode according to claim 8, **characterized in that** the first planar metal structure comprises or consists of a metal that has a higher Vickers hardness than aluminium, and the second planar metal structure comprises or consists of aluminium or an aluminium alloy, wherein the aluminium alloy preferably comprises at least 50 wt.% aluminium, wherein the first planar metal structure is pressed into the carbon coating of the second planar metal structure over a distance that corresponds at least to the specific height of the carbon coating, wherein the distance preferably corresponds at least to a sum of the specific height of the carbon coating and the specific height of the second planar metal structure, and the plurality of openings on the underside of the first planar metal structure are additionally filled with aluminium or the aluminium alloy of the second planar metal structure, wherein the distance particularly preferably corresponds to a sum of the specific height of the carbon coating, the specific height of the second planar metal structure and a specific height of a further carbon coating which is applied to the underside of the second planar metal structure, and the plurality of openings on the underside of the first planar metal structure are additionally filled with carbon of the further carbon coating, wherein the first planar metal structure comprises or consists of a metal that is selected from the group consisting of nickel, copper, stainless steel and combinations and alloys thereof, wherein the metal preferably comprises or consists of stainless steel, wherein the first planar metal structure is, in particular, a stainless steel mesh with a plurality of openings on the underside of the stainless steel mesh, a stainless steel expanded metal with a plurality of openings on the underside of the stainless steel expanded metal or a stainless steel foil with a plurality of openings on the underside of the stainless steel foil.

11. The electrode according to any one of claims 8 to 10, **characterized in that** the first planar metal structure
i) has a plurality of continuous openings, which extend from the underside to the top side of the first planar metal structure; and/or
ii) is selected from the group consisting of metal foil, expanded metal, perforated sheet metal, metal mesh and combinations thereof; and/or
iii) has a seed layer on the top side and/or underside and contacts this seed layer, wherein the seed layer comprises or consists of a metal that is selected from the group consisting of zinc, tin, indium and combinations thereof, wherein the seed layer preferably has a height, in a direction perpendicular to the top side and/or underside of the seed layer, in the range of from > 0 to < 1 µm; and/or
iv) has a height, in a direction perpendicular to the top side and/or underside of the first planar metal structure, in the range of from 1 to 100 µm, preferably 5 to 50 µm, particularly preferably 10 to 40 µm; and/or
v) has a surface structuring on the top side and/or underside, wherein the surface structuring is preferably selected from the group consisting of brushed surface structuring, grooved surface structuring, embossed surface structuring, etched surface structuring, lasered surface structuring and combinations thereof.

12. The electrode according to any one of claims 8 to 11, **characterized in that** the second planar metal structure
i) is selected from the group consisting of metal foil, expanded metal, perforated sheet metal, metal mesh and combinations thereof; and/or
ii) has a seed layer on the top side and/or underside and contacts this seed layer, wherein the seed layer comprises or consists of a metal that is selected from the group consisting of zinc, tin, indium and combinations thereof, wherein the seed layer preferably has a height, in a direction perpendicular to the top side and/or underside of the seed layer, in the range of from > 0 to < 1 µm; and/or
iii) has a height, in a direction perpendicular to the top side and/or underside of the second planar metal structure, in the range of from 1 to 100 µm, preferably 2 to 50 µm, particularly preferably 5 to 40 µm, optionally 10 to 20 µm; and/or
iv) has a surface structuring on the top side and/or underside, wherein the surface structuring is preferably selected from the group consisting of brushed surface structuring, grooved surface structuring, embossed surface structuring, etched surface structuring, lasered surface structuring and combinations thereof.

13. The electrode according to any one of claims 8 to 12, **characterized in that** the carbon coating, optionally also a further carbon coating that is applied to the underside of the second planar metal structure,
i) comprises or consists of a carbon that is selected from the group consisting of activated carbon, graphite, graphene, conductive carbon black, carbon nanotubes, carbon nanowires, carbon C65, carbon C45 and combinations thereof; and/or
ii) has a height in the range of from 1 to 100 µm, preferably in the range of from 2 to 50 µm, particularly preferably in the range of from 5 to 40 µm.

14. A galvanic cell, comprising a negative electrode according to any one of claims 8 to 13, a cathode and an electrolyte, wherein the galvanic cell preferably further comprises a separator which is arranged between the negative electrode and the cathode, wherein particularly preferably a planar metal structure, which comprises or consists of aluminium, or a further carbon coating of the electrode, faces the separator.

15. Use of the galvanic cell according to claim 14 for power supply
i) of a mobile device, preferably a mobile phone, headphones, a vehicle, an aircraft and/or a ship; and/or
ii) of a stationary device, preferably a building; and/or
iii) of a medical device, preferably a hearing aid and/or a pacemaker.

## Revendications

1. Procédé de production d'une électrode négative destinée à une cellule galvanique, comprenant les étapes consistant à :
a) fournir une première structure métallique plane qui présente une face supérieure plane et une face inférieure plane et qui présente une hauteur déterminée dans une direction perpendiculaire à la face supérieure et à la face inférieure, dans lequel la première structure métallique plane présente au niveau de sa face inférieure plane une pluralité d'orifices s'étendant à partir de la face inférieure en direction de la face supérieure de la première structure métallique plane ;
b) fournir une seconde structure métallique plane qui présente une face supérieure plane et une face inférieure plane et qui présente une hauteur déterminée dans une direction perpendiculaire à la face supérieure et à la face inférieure, dans lequel au moins la face supérieure de la seconde structure métallique plane présente un revêtement de carbone, dans lequel le revêtement de carbone présente une face supérieure plane et une face inférieure plane et présente une hauteur déterminée dans une direction perpendiculaire à la face supérieure et à la face inférieure, dans lequel la face inférieure du revêtement de carbone est en contact avec la face supérieure de la seconde structure métallique plane ;
**caractérisé en ce que** la première structure métallique plane est incrustée au moins dans le revêtement de carbone de la seconde structure métallique plane et **en ce que** la pluralité d'orifices situés au niveau de la face inférieure plane de la première structure métallique plane sont remplis, au moins dans certaines régions, de carbone provenant du revêtement de carbone de la seconde structure métallique plane, dans lequel la première structure métallique plane ou la seconde structure métallique plane contient de l'aluminium ou un alliage d'aluminium, ou en est constituée.

2. Procédé selon la revendication 1, **caractérisé en ce que** la première structure métallique plane contient de l'aluminium ou un alliage d'aluminium, ou en est constituée, dans lequel l'alliage d'aluminium contient de manière préférée au moins 50 % en poids d'aluminium, et **en ce que** la seconde structure métallique plane contient, ou est constituée de, un métal présentant une dureté Vickers supérieure à celle de l'aluminium, dans lequel la première structure métallique plane est incrustée dans le revêtement de carbone de la seconde structure métallique plane sur une distance correspondant au plus à la hauteur déterminée du revêtement de carbone, dans lequel la seconde structure métallique plane contient, ou est constituée de, éventuellement un métal qui est choisi parmi le groupe constitué du nickel, du cuivre, de l'acier inoxydable et de leurs combinaisons et alliages, dans lequel ledit métal contient de manière préférée du cuivre ou en est constitué, dans lequel la seconde structure métallique plane est en particulier une feuille de cuivre.

3. Procédé selon la revendication 1, **caractérisé en ce que** la première structure métallique plane contient, ou est constituée de, un métal présentant une dureté Vickers supérieure à celle de l'aluminium, et **en ce que** la seconde structure métallique plane contient de l'aluminium ou un alliage d'aluminium, ou en est constituée, dans lequel l'alliage d'aluminium contient de manière préférée au moins 50 % en poids d'aluminium, dans lequel la première structure métallique plane est incrustée dans le revêtement de carbone de la seconde structure métallique plane sur une distance correspondant à au moins la hauteur déterminée du revêtement de carbone, dans lequel ladite distance correspond de manière préférée à au moins la somme de la hauteur déterminée du revêtement de carbone et de la hauteur déterminée de la seconde structure métallique plane et la pluralité d'orifices situés au niveau de la face inférieure de la première structure métallique plane sont en outre remplis d'aluminium ou de l'alliage d'aluminium de la seconde structure métallique plane, dans lequel ladite distance correspond de manière préférée à la somme de la hauteur déterminée du revêtement de carbone, de la hauteur déterminée de la seconde structure métallique plane et d'une hauteur déterminée d'un revêtement de carbone supplémentaire qui sera ou est appliqué sur la face inférieure de la seconde structure métallique plane, et la pluralité d'orifices situés au niveau de la face inférieure de la première structure métallique plane se remplissent en outre avec du carbone du revêtement de carbone supplémentaire, dans lequel la première structure métallique plane contient, ou est constituée de, éventuellement un métal choisi parmi le groupe constitué du nickel, du cuivre, de l'acier inoxydable et de leurs combinaisons et alliages, dans lequel ledit métal contient de manière préférée de l'acier inoxydable ou en est constitué, dans lequel la première structure métallique plane est en particulier un treillis en acier inoxydable comprenant une pluralité d'orifices au niveau de la face inférieure du treillis en acier inoxydable, un métal déployé à base d'acier inoxydable comprenant une pluralité d'orifices au niveau de la face inférieure du métal déployé à base d'acier inoxydable, ou une feuille d'acier inoxydable comprenant une pluralité d'orifices au niveau de la face inférieure de la feuille d'acier inoxydable.

4. Procédé selon l'une quelconque des revendications précédentes, **caractérisé en ce que** la première structure métallique plane
i) présente une pluralité d'orifices traversants s'étendant à partir de la face inférieure jusqu'à la face supérieure de la première structure métallique plane ; et/ou
ii) est choisie parmi le groupe constitué des feuilles métalliques, des métaux déployés, des tôles perforées, des treillis métalliques et de leurs combinaisons ; et/ou
iii) présente une couche de nucléation au niveau de la face supérieure et/ou de la face inférieure et est en contact avec ladite couche de nucléation, dans lequel la couche de nucléation contient, ou est constituée de, un métal choisi parmi le groupe constitué du zinc, de l'étain, de l'indium et de leurs combinaisons, dans lequel la couche de nucléation présente de manière préférée une hauteur, dans une direction perpendiculaire à la face supérieure et/ou à la face inférieure de la couche de nucléation, située dans la plage comprise entre > 0 et < 1 µm ; et/ou
iv) présente une hauteur, dans une direction perpendiculaire à la face supérieure et/ou à la face inférieure de la première structure métallique plane, située dans la plage comprise entre 1 et 100 µm, de manière préférée comprise entre 5 et 50 µm, et de manière particulièrement préférée comprise entre 10 et 40 µm ; et/ou
v) présente une structuration de surface sur la face supérieure et/ou la face inférieure, dans lequel la structuration de surface est de manière préférée choisie parmi le groupe constitué de la structuration de surface brossée, de la structuration de surface striée, de la structuration de surface embossée, de la structuration de surface gravée, de la structuration de surface tracée au laser et de leurs combinaisons.

5. Procédé selon l'une quelconque des revendications précédentes, **caractérisé en ce que** la seconde structure métallique plane
i) est choisie parmi le groupe constitué des feuilles métalliques, des métaux déployés, des tôles perforées, des treillis métalliques et de leurs combinaisons ; et/ou
ii) présente une couche de nucléation au niveau de la face supérieure et/ou de la face inférieure et est en contact avec ladite couche de nucléation, dans lequel la couche de nucléation contient, ou est constituée de, un métal choisi parmi le groupe constitué du zinc, de l'étain, de l'indium et de leurs combinaisons, dans lequel la couche de nucléation présente de manière préférée une hauteur, dans une direction perpendiculaire à la face supérieure et/ou à la face inférieure de la couche de nucléation, située dans la plage comprise entre > 0 et < 1 µm ; et/ou
iii) présente, dans une direction perpendiculaire à la face supérieure et/ou à la face inférieure de la seconde structure métallique plane, une hauteur située dans la plage comprise entre 1 et 100 µm, de manière préférée comprise entre 2 et 50 µm, et de manière particulièrement comprise entre 5 et 40 µm, éventuellement comprise entre 10 et 20 µm ; et/ou
iv) présente une structuration de surface sur la face supérieure et/ou la face inférieure, dans lequel la structuration de surface est de manière préférée choisie parmi le groupe constitué de la structuration de surface brossée, de la structuration de surface striée, de la structuration de surface embossée, de la structuration de surface gravée, de la structuration de surface tracée au laser et de leurs combinaisons.

6. Procédé selon l'une quelconque des revendications précédentes, **caractérisé en ce que** le revêtement de carbone, éventuellement aussi un revêtement de carbone supplémentaire, sera ou est appliqué sur la face inférieure de la seconde structure métallique plane,
i) contient, ou est constitué de, un carbone choisi parmi le groupe constitué du charbon actif, du graphite, du graphène, du noir de carbone conducteur, des nanotubes de carbone, des nanofils de carbone, du carbone C65, du carbone C45 et de leurs combinaisons ; et/ou
ii) présente une hauteur située dans la plage comprise entre 1 et 100 µm, de manière préférée dans la plage comprise entre 2 et 50 µm, de manière particulièrement préférée dans la plage comprise entre 5 et 40 µm.

7. Procédé selon l'une quelconque des revendications précédentes, **caractérisé en ce que** l'incrustation de la première structure métallique plane dans le revêtement de carbone de la seconde structure métallique plane comprend, ou est constituée de, une étape consistant à exercer une pression mécanique d'au moins 390 kg/cm², de manière préférée située dans la plage comprise entre 2500 et 6000 kg/cm², sur la face supérieure de la première structure métallique plane, dans lequel la pression mécanique est de manière particulièrement préférée appliquée par l'intermédiaire d'une presse à levier à froid pendant une durée comprise entre 10 et 20 secondes à une température située dans la plage comprise entre 20 et 30°C.

8. Électrode négative destinée à une cellule galvanique, contenant ou constituée de :
a) une première structure métallique plane qui présente une face supérieure plane et une face inférieure plane et qui présente une hauteur déterminée dans une direction perpendiculaire à la face supérieure et à la face inférieure, dans laquelle la première structure métallique plane présente au niveau de sa face inférieure une pluralité d'orifices qui s'étendent à partir de la face inférieure en direction de la face supérieure de la première structure métallique plane ;
b) une seconde structure métallique plane qui présente une face supérieure plane et une face inférieure plane et qui présente une hauteur déterminée dans une direction perpendiculaire à la face supérieure et à la face inférieure, dans laquelle au moins la face supérieure de la seconde structure métallique plane présente un revêtement de carbone, dans laquelle le revêtement de carbone présente une face supérieure plane et une face inférieure plane et présente une hauteur déterminée dans une direction perpendiculaire à la face supérieure et à la face inférieure, dans laquelle la face inférieure du revêtement de carbone est en contact avec la face supérieure de la seconde structure métallique plane ;
**caractérisée en ce que** la première structure métallique plane est incrustée dans le revêtement de carbone de la seconde structure métallique plane de sorte que la pluralité d'orifices situés au niveau de la face inférieure plane de la première structure métallique plane sont remplis, au moins dans certaines régions, au moins avec du carbone provenant du revêtement de carbone de la seconde structure métallique plane, dans laquelle la première structure métallique plane ou la seconde structure métallique plane contient de l'aluminium ou un alliage d'aluminium, ou en est constituée.

9. Électrode selon la revendication 8, **caractérisée en ce que** la première structure métallique plane contient de l'aluminium ou un alliage d'aluminium, ou en est constituée, dans laquelle l'alliage d'aluminium contient de manière préférée au moins 50 % en poids d'aluminium, et **en ce que** la seconde structure métallique plane contient, ou est constituée de, un métal présentant une dureté Vickers supérieure à celle de l'aluminium, dans laquelle la première structure métallique plane est incrustée dans le revêtement de carbone de la seconde structure métallique plane sur une distance correspondant au plus à la hauteur déterminée du revêtement de carbone, dans laquelle la seconde structure métallique plane contient, ou est constituée de, éventuellement un métal qui est choisi parmi le groupe constitué du nickel, du cuivre, de l'acier inoxydable et de leurs combinaisons et alliages, dans laquelle ledit métal contient de manière préférée du cuivre ou en est constitué.

10. Électrode selon la revendication 8, **caractérisée en ce que** la première structure métallique plane contient, ou est constituée de, un métal présentant une dureté Vickers supérieure à celle de l'aluminium, et **en ce que** la seconde structure métallique plane contient de l'aluminium ou un alliage d'aluminium, ou en est constituée, dans laquelle l'alliage d'aluminium contient de manière préférée au moins 50 % en poids d'aluminium, dans laquelle la première structure métallique plane est incrustée dans le revêtement de carbone de la seconde structure métallique plane sur une distance correspondant à au moins la hauteur déterminée du revêtement de carbone, dans laquelle ladite distance correspond de manière préférée à au moins la somme de la hauteur déterminée du revêtement de carbone et de la hauteur déterminée de la seconde structure métallique plane et la pluralité d'orifices situés au niveau de la face inférieure de la première structure métallique plane sont en outre remplis d'aluminium ou de l'alliage d'aluminium de la seconde structure métallique plane, dans laquelle ladite distance correspond de manière préférée à la somme de la hauteur déterminée du revêtement de carbone, de la hauteur déterminée de la seconde structure métallique plane et d'une hauteur déterminée d'un revêtement de carbone supplémentaire qui est appliqué sur la face inférieure de la seconde structure métallique plane, et la pluralité d'orifices situés au niveau de la face inférieure de la première structure métallique plane sont en outre remplis avec du carbone du revêtement de carbone supplémentaire, dans laquelle la première structure métallique plane contient, ou est constituée de, un métal choisi parmi le groupe constitué du nickel, du cuivre, de l'acier inoxydable et de leurs combinaisons et alliages, dans laquelle ledit métal contient de manière préférée de l'acier inoxydable ou en est constitué, dans laquelle la première structure métallique plane est en particulier un treillis en acier inoxydable comprenant une pluralité d'orifices au niveau de la face inférieure du treillis en acier inoxydable, un métal déployé à base d'acier inoxydable comprenant une pluralité d'orifices au niveau de la face inférieure du métal déployé à base d'acier inoxydable, ou une feuille d'acier inoxydable comprenant une pluralité d'orifices au niveau de la face inférieure de la feuille d'acier inoxydable.

11. Électrode selon l'une quelconque des revendications 8 à 10, **caractérisée en ce que** la première structure métallique plane
i) présente une pluralité d'orifices traversants s'étendant à partir de la face inférieure jusqu'à la face supérieure de la première structure métallique plane ; et/ou
ii) est choisie parmi le groupe constitué des feuilles métalliques, des métaux déployés, des tôles perforées, des treillis métalliques et de leurs combinaisons ; et/ou
iii) présente une couche de nucléation au niveau de la face supérieure et/ou de la face inférieure et est en contact avec ladite couche de nucléation, dans lequel la couche de nucléation contient, ou est constituée de, un métal choisi parmi le groupe constitué du zinc, de l'étain, de l'indium et de leurs combinaisons, dans lequel la couche de nucléation présente de manière préférée une hauteur, dans une direction perpendiculaire à la face supérieure et/ou à la face inférieure de la couche de nucléation, située dans la plage comprise entre > 0 et < 1 µm ; et/ou
iv) présente une hauteur, dans une direction perpendiculaire à la face supérieure et/ou à la face inférieure de la première structure métallique plane, située dans la plage comprise entre 1 et 100 µm, de manière préférée comprise entre 5 et 50 µm, et de manière particulièrement préférée comprise entre 10 et 40 µm ; et/ou
v) présente une structuration de surface sur la face supérieure et/ou la face inférieure, dans lequel la structuration de surface est de manière préférée choisie parmi le groupe constitué de la structuration de surface brossée, de la structuration de surface striée, de la structuration de surface embossée, de la structuration de surface gravée, de la structuration de surface tracée au laser et de leurs combinaisons.

12. Électrode selon l'une quelconque des revendications 8 à 11, **caractérisée en ce que** la seconde structure métallique plane
i) est choisie parmi le groupe constitué des feuilles métalliques, des métaux déployés, des tôles perforées, des treillis métalliques et de leurs combinaisons ; et/ou
ii) présente une couche de nucléation au niveau de la face supérieure et/ou de la face inférieure et est en contact avec ladite couche de nucléation, dans lequel la couche de nucléation contient, ou est constituée de, un métal choisi parmi le groupe constitué du zinc, de l'étain, de l'indium et de leurs combinaisons, dans lequel la couche de nucléation présente de manière préférée une hauteur, dans une direction perpendiculaire à la face supérieure et/ou à la face inférieure de la couche de nucléation, située dans la plage comprise entre > 0 et < 1 µm ; et/ou
iii) présente, dans une direction perpendiculaire à la face supérieure et/ou à la face inférieure de la seconde structure métallique plane, une hauteur située dans la plage comprise entre 1 et 100 µm, de manière préférée comprise entre 2 et 50 µm, et de manière particulièrement comprise entre 5 et 40 µm, éventuellement comprise entre 10 et 20 µm ; et/ou
iv) présente une structuration de surface sur la face supérieure et/ou la face inférieure, dans lequel la structuration de surface est de manière préférée choisie parmi le groupe constitué de la structuration de surface brossée, de la structuration de surface striée, de la structuration de surface embossée, de la structuration de surface gravée, de la structuration de surface tracée au laser et de leurs combinaisons.

13. Électrode selon l'une quelconque des revendications 8 à 12, **caractérisée en ce que** le revêtement de carbone, éventuellement aussi un revêtement de carbone supplémentaire, est appliqué sur la face inférieure de la seconde structure métallique plane,
i) contient, ou est constitué de, un carbone choisi parmi le groupe constitué du charbon actif, du graphite, du graphène, du noir de carbone conducteur, des nanotubes de carbone, des nanofils de carbone, du carbone C65, du carbone C45 et de leurs combinaisons ; et/ou
ii) présente une hauteur située dans la plage comprise entre 1 et 100 µm, de manière préférée dans la plage comprise entre 2 et 50 µm, de manière particulièrement préférée dans la plage comprise entre 5 et 40 µm.

14. Cellule galvanique, contenant une électrode négative selon l'une quelconque des revendications 8 à 13, une cathode et un électrolyte, dans laquelle la cellule galvanique contient de manière préférée en outre un séparateur agencé entre l'électrode négative et la cathode, dans laquelle une structure métallique plane, contenant de l'aluminium ou constituée d'aluminium, ou un revêtement de carbone supplémentaire de l'électrode fait face de manière particulièrement préférée au séparateur.

15. Utilisation de la cellule galvanique selon la revendication 14 pour l'alimentation en énergie
i) un dispositif mobile, de manière préférée un téléphone portable, un casque d'écoute, un véhicule, un aéronef et/ou un navire ; et/ou
ii) un dispositif stationnaire, de manière préférée un bâtiment ; et/ou
iii) un appareil médical, de manière préférée un appareil auditif et/ou un stimulateur cardiaque.
